# EUROPÄISCHE PATENTSCHRIFT

(11) **EP 2 551 697 B1**
(45) Veröffentlichungstag und Bekanntmachung des Hinweises auf die Patenterteilung: **19.12.2018**
(21) Anmeldenummer: 12175227.3
(22) Anmeldetag: 06.07.2012
(51) Int. Cl.: G01S 13/56, G01S 7/282, G01S 13/02, G01S 13/58

(54) **VERFAHREN ZUM DETEKTIEREN EINER ÄNDERUNG INNERHALB EINES EINEM PRÄSENZ- ODER BEWEGUNGSSENSOR ZUGEORDNETEN ÜBERWACHUNGSBEREICHES**
METHOD FOR DETECTING A CHANGE IN A SURVEILLANCE RANGE OF AN ASSOCIATED PRESENCE OR MOTION DETECTOR
PROCÉDÉ DE DETECTION D'UNE VARIATION D'UN DÉTECTEUR DE PRÉSENCE OU DE MOUVEMENTS ASSOCIÉ À UNE ZONE DE SURVEILLANCE

(30) Priorität: 28.07.2011 DE 102011052221
(43) Veröffentlichungstag der Anmeldung: 30.01.2013
(73) Patentinhaber: Insta GmbH, 58509 Lüdenscheid (DE)
(72) Erfinder: Becker-Hennecke Ralph, 58239 Schwerte (DE); Mundinger Harald, 58849 Herscheid (DE); Dufhues Stephan, 58089 Hagen (DE)
(74) Vertreter: Haverkamp, Jens

(56) Entgegenhaltungen:
- US-A- 5 486 833
- US-A1- 2002 075 976

## Beschreibung

Die Erfindung betrifft ein Verfahren zum Detektieren einer Änderung innerhalb eines einem Präsenz- oder Bewegungssensor zugeordneten Überwachungsbereiches umfassend: Generieren und Senden eines UWB-Signals als Sendetemplate, Empfangen eines von einem in Detektionsreichweite befindlichen Objekt reflektierten Signals als Empfangssignal und Auswerten des Empfangssignals in Bezug auf seine Entfernung zu dem Sensor, wobei die Empfangssignale mit einem Empfangstemplate korreliert werden und die Korrelation dergestalt zeitlich versetzt zu dem Zeitpunkt des Sendens des Sendetemplates durchgeführt wird, dass der zeitliche Versatz der bei einer vorgegebenen Entfernung des in Detektionsreichweite befindlichen Objekts erwarteten Signallaufzeit entspricht und bei hinreichender Übereinstimmung zwischen einem Empfangssignal und dem Empfangstemplate das Empfangssignal als von dem in der vorgegebenen Entfernung befindlichen Objekt reflektiertes Sendetemplate bewertet wird, wobei das Empfangstemplate dem Sendetemplate entspricht und eine durch eine Gaußpulshüllkurve im Zeitbereich gewichtete Winkelfunktion als Sendetemplate generiert wird. Die Erfindung betrifft des Weiteren eine Vorrichtung, mit der sich dieses Verfahren ausführen lässt.

Derartige Detektionseinrichtungen dienen beispielsweise zum Detektieren von Bewegungen. Mithin handelt es sich sodann um Bewegungsdetektionseinrichtungen, sogenannte Bewegungsmelder. Diese arbeiten oftmals mit einem Infrarotsignal. Ziel derartiger Einrichtungen ist es, innerhalb des jeweiligen Überwachungsbereiches Bewegungen zu erkennen. Je nach Einsatz einer solchen Bewegungsdetektionseinrichtung dienen diese zum Überwachen von Außenbereichen von Gebäuden. Bewegungsmelderanordnungen sind auch aus dem Gebäudeinnenbereich bekannt. In Abhängigkeit von dem Einsatz einer solchen Bewegungsdetektionseinrichtung können an die Detektion einer Bewegung unterschiedliche Aktionen gekoppelt sein. Im Zusammenhang mit einem Gebäudeinstallationssystem werden Bewegungsdetektionseinrichtungen eingesetzt, um in Abhängigkeit von der erkannten Bewegung einer Person im Detektionsbereich bestimmte gebäudetechnische Installationen, beispielsweise das Licht, zu schalten.

Eine solche Einrichtung ist aus DE 10 2004 011 108 A1 bekannt. Bei dieser vorbekannten Bewegungsdetektionseinrichtung wird ein Radarsensor eingesetzt, der gegenüber optischen Sensoren den Vorteil einer unsichtbaren Installation, also einer Installation, etwa hinter einer Fliese als Wandbelag, hat. Radarsensoren arbeiten unter Ausnutzung des Doppler-Effektes. Ausgewertet wird bei derartigen Radarverfahren die von einem im Detektionsbereich befindlichen Objekt aufgrund der Signalreflektion erfolgende Verschiebung um die Dopplerfrequenz, wobei das Maß der Verschiebung ein Maß für die Geschwindigkeit des im Überwachungsbereich befindlichen Objekts zur Bewegungsdetektionseinrichtung ist. Eine Weiterbildung dieses an sich bekannten Verfahrens ist in DE 197 49 991 C1 beschrieben. Bei diesem Verfahren werden die Sendesignale kontinuierlich oder gepulst, typischerweise im Mikrowellenbereich gesendet. Die Empfindlichkeit und die Reichweite dieser vorbekannten Bewegungsdetektionseinrichtung werden unter anderem durch die Antennenapparatur und damit durch den Abstand zwischen der Sendeantenne und der Empfangsantenne bestimmt. Die Entfernungsauflösung von vorbekannten, mit Pulsradarsignalen betriebenen Bewegungsdetektionseinrichtungen liegt aus technologischen Gründen bei etwa 10-15m und kann mit einer Pulsdauer von 100ns erreicht werden. Deutlich kürzere Pulsdauern, die eine bessere Entfernungsauflösung gestatten würden, haben einen HF-Mehraufwand zur Folge. Aus diesen Gründen ist der Einsatz einer solchen Technologie im Zusammenhang mit einer Gebäudeinstallation nur beschränkt einsetzbar. Jedenfalls eignet sich diese Technologie nicht sonderlich, um als Präsenz- bzw. Zutrittsmelder oder für die Zwecke des Schaltens von Licht eingesetzt zu werden. Herkömmliche, nach dem Doppler-Radar arbeitende Systeme gestatten zwar eine bessere Entfernungsauflösung, allerdings können mit diesem Verfahren nur bewegte Objekt detektiert werden.

Aus US 5,345,471 A1 ist ein UWB-Empfänger zum Detektieren eines UWB-Impuls-Signals bekannt. Eingesetzt wird der aus diesem Dokument bekannte Empfänger im Zusammenhang mit einem Radarüberwachungssystem. Dieser vorbekannte UWB-Empfänger arbeitet nach dem Prinzip einer Leistungsdetektion, ebenso wie die anderen vorstehend beschriebenen Radarsensoren. Der UWB-Empfänger ist zum Empfangen relativ niederfrequenter Radarsignale ausgelegt. Dadurch ist die Auflösung für viele Anwendungsfälle allerdings nicht hinreichend. Der aus diesem Dokument bekannte UWB-Empfänger ist für einen Einsatz im Zusammenhang mit Bewegungsdetektionseinrichtungen, wie diese beispielsweise im Rahmen einer Gebäudeinstallation eingesetzt werden, nicht geeignet.

Aus dem Automotive-Bereich ist ein Verfahren gemäß dem Oberbegriff der unabhängigen Ansprüche bekannt. Bei diesem Verfahren wird das UWB-Signal als Sendetemplate über eine Verzögerungsschaltung als Empfangstemplate in die Korrelation eingebracht. Beschrieben ist ein derartiges Verfahren in Ultra-Wideband Radar Sensors for Short Range Vehicular Applications, IEEE Transactions on Microwave Theory and Techniques, Vol. 52, No. 9, September 2004. Bei diesem Verfahren erfolgt eine zeitliche Filterung der Empfangssignale mit dem Ziel, das Empfangssignal zu demjenigen Zeitpunkt mit dem Empfangstemplate zu vergleichen, wenn von einem in Detektionsreichweite befindlichen Objekt, der sich in einer vorbestimmten Entfernung zu dem Sensor befindet, ein Signaleingang eines zuvor gesendeten und von dem Objekt reflektierten Signals erwartet wird. Bei diesem Verfahren beschränken sich die Korrelation und damit die Auswertearbeit auf einen bestimmten zeitlichen Ausschnitt aus dem Empfangssignalverlauf. Der Auswertealgorithmus ist entsprechend weniger aufwändig, insbesondere weniger zeitaufwändig. Entspricht das Empfangssignal dem Empfangstemplate in hinreichendem Maße, wird gefolgert, dass es sich bei diesem Empfangssignal um das von einem in der vorgegebenen Entfernung befindlichen Objekt reflektiertes Sendetemplate handelt. Die Auflösung hinsichtlich der Tiefe des Detektionsbereiches erfolgt durch Ändern der zeitlichen Verzögerung des Durchführens der Korrelation zwischen Empfangstemplate und Empfangssignal. Dieses erfolgt vor dem Hintergrund, dass mit unterschiedlichem Abstand zu dem Sensor befindliche Objekt entsprechend unterschiedlich lange bzw. kurze Signallaufzeiten zur Folge haben.

Diesem vorbekannten Verfahren wird vorausgesetzt, dass das dem Sendetemplate entsprechende Empfangstemplate und ein durch einen im Überwachungsbereich befindlichen Objekt reflektiertes Sendetemplate als Empfangssignal hinreichend übereinstimmen. Es hat sich jedoch gezeigt, dass trotz Vorhandenseins eines Objekts in Detektionsreichweite dieser nicht, jedenfalls nicht immer zuverlässig detektiert werden kann, vor allem wenn dieser bewegt ist.

Die US 5,486,833 zeigt ein Signalgebungssystem, das dazu vorgesehen ist, Zielobjekte mit hoher Genauigkeit zu detektieren und darzustellen. Hierzu werden spezielle kurzzeitige Detektionsimpulse erzeugt, die aus einer Überlagerung von Funktionen bestehen, die in Zeitdarstellung jeweils eine Weber-Hermite-Funktion als Hüllfunktion aufweisen. Durch das charakteristische Reflexionsverhalten eines Zielobjekts für die unterschiedlichen Anteile des Detektionsimpulses ist es möglich, ein Zielobjekt zu identifizieren oder mittels eines auf ein bestimmtes Zielobjekt abgestimmten Detektionsimpuls dieses Zielobjekt genau zu verfolgen. Gemäß einem Ausführungsbeispiel erfolgt die Auswertung des reflektierten Impulses durch Kreuzkorrelation mit dem Sendeimpuls.

Ausgehend von diesem diskutierten Stand der Technik liegt der Erfindung daher die Aufgabe zugrunde, ein Verfahren der eingangs genannten Art dergestalt weiterzubilden, dass nicht nur eine präzise Erkennung eines gesendeten und reflektierten Signals mit einfachen Schritten möglich ist, sondern dass sich dieses für einen Einsatz im Rahmen eines Präsenz- oder Bewegungssensors vor allem im Nahbereich eignet. Zudem liegt der Erfindung die Aufgabe zugrunde, eine Vorrichtung vorzuschlagen, mit der dieses möglich ist.

Gelöst wird dieses technische Problem durch ein eingangs genanntes, gattungsgemäßes Verfahren, bei dem das Empfangstemplate an das erwartete Empfangssignal durch eine Vorverzerrung angepasst wird. Der vorrichtungsbezogene Teil der Aufgabe wird durch eine Vorrichtung gelöst, bei der die Vorrichtung das Empfangstemplate an das erwartete Empfangssignal durch eine Vorverzerrung anpasst.

Der im Rahmen dieser Ausführungen benutzte Begriff "Sendetemplate" stellt das von einem Signalgenerator bereitgestellte Signal dar, bevor dieses in die Sendestufe des Sensors eingespeist wird. Das "Empfangstemplate" ist dasjenige Signal, welches als Referenzsignal in die Auswertung der empfangenen Signale eingebracht wird.

Bei diesem Verfahren wird ein besonderes Sendetemplate generiert, und zwar ein solches, das gegenüber ansonsten Einfluss nehmenden Faktoren beim Senden und/oder beim Reflektieren und/oder beim Empfangen wenig anfällig bzw. gegenüber solchen, auf herkömmliche Signale Einfluss nehmenden Faktoren resistent ist. Dieses bedeutet nicht, dass dieses Sendetemplate keinerlei Änderungen auf seinem Weg durch den Sendevorgang, den Vorgang des Reflektierens und den Vorgang des Empfangens erfährt. Durchaus kann eine Signaländerung bei den beschriebenen Vorgängen eintreten, solange diese im Zuge des sich an den Signalempfang anschließenden Auswertevorgang hinreichend eliminiert werden bzw. diesen nicht über Maßen nachteilig beeinflussen. Insofern erstreckt sich der vorstehend verwendete Begriff der Resistenz des Sendetemplates nicht nur auf eine Resistenz im engeren Sinne, sondern umfasst auch eine Auswerte- bzw. Korrelationsresistenz des abgeleiteten Sendetemplates.

Den vorstehenden Anforderungen genügt ein UWB-Signal als Sendetemplate, das eine Mischung aus einem Gaußpuls und einer Winkelfunktion, beispielsweise einer Sinus- oder Kosinusfunktion darstellt. Bei diesem Signal ist das für UWB-Anwendungen notwendige breitbandige Spektrum durch den Gaußpuls sichergestellt, während für die Differenzierungseigenschaften der Winkelfunktionsanteil verantwortlich ist. Erzeugt wird ein solches Sendetemplate gemäß einer Ausgestaltung durch die Gewichtung einer Winkelfunktion, beispielsweise einer Sinusfunktion oder einer Kosinusfunktion im Zeitbereich mit einer Gaußpulshüllkurve. Generiert wird ein solches Sendetemplate gemäß diesem Ausführungsbeispiel durch einzelne, sehr kurze Pulse wobei die Winkelfunktion mit einer Gauß-Funktion im Zeitbereich gewichtet wird. Die Pulsdauer liegt typischerweise im Subnanosekundenbereich. Der besondere Vorteil eines solchen Sendetemplates liegt darin, dass Ableitungen des Sendetemplates - also: Signaländerungen, die beim Vorgang des Sendens, des Reflektierens und/oder des Empfangens eintreten können - nur zu leichten Deformierungen und/oder einer Invertierung um 180° (Phasenverschiebung) führen. Leichte Deformierungen des Pulses führen nur zu geringen Verlusten bei der Korrelation, so dass die Auswertung in Bezug auf ihre Detektionsverlässlichkeit hierdurch nur kaum an Qualität einbüßt. Diese können mithin in Kauf genommen werden. Invertierungen um 180°, die somit einer Phasenverschiebung entsprechen, werden durch die üblicherweise eingesetzte Stuktur der Auswerteeinheit kompensiert. Untersuchungen haben zu dem überraschenden Ergebnis geführt, dass bereits nach wenigen Ableitungen wieder ein im wesentlichen unverzerrtes Sendetemplate vorliegt. Es versteht sich, dass, wenn das Empfangssignal dem Sendetemplate entspricht, die Detektionsverlässlichkeit am höchsten ist, da das Empfangstemplate bei dieser Ausgestaltung dem Sendetemplate entspricht bzw. mit diesem identisch ist. Es war nicht zu erwarten, dass mit zunehmender Signaländerung durch Störeinflüsse nach einer bereits geringen Anzahl von Störeinflüssen das Empfangssignal identisch oder quasi identisch mit dem Sendetemplate ist.

Von Vorteil bei diesem Verfahren ist auch, dass Sendetemplate und Empfangstemplate identisch sein können. Zwar ist es möglich, auch bei diesem Verfahren eine Signalvorverzerrung vorzunehmen, jedoch ist bevorzugt, wenn Sendetemplate und Empfangstemplate identisch sind. Bei identischem Sendetemplate und Empfangstemplate ist es möglich, nach Generierung eines solchen dieses in den Sendevorgang und gleichzeitig in einem Verzögerungsglied einzuspeisen, durch welches dieses sodann als Empfangstemplate in die Korrelation eingebracht wird. Möglich ist auch eine Verfahrensausgestaltung, bei der das Sendetemplate und das Empfangstemplate zeitlich nacheinander generiert werden.

Realisieren lässt sich ein Signalvergleich zwischen Empfangssignal und Empfangstemplate durch Einsatz eines Korrelationsgliedes, umfassend einen Multiplizierer und einen diesem nachgeschalteten Integrator. In den Multiplizierer werden die Empfangssignale und das Referenzsignal eingespeist.

Der Sendebetrieb kann codiert vorgenommen werden, und zwar indem in einem vorgegebenen Takt entweder ein Signal oder kein Signal gesendet wird.

Eine weitere Verbesserung in der Erkennung eines Sendetemplates, die von einem im Überwachungsbereich befindlichen Objekt reflektiert worden sind, lässt sich erreichen, wenn, wie in einem bevorzugten Ausführungsbeispiel vorgesehen, der Signalvergleich nicht nur in einem Korrelationsglied sondern synchron in zumindest einem weiteren Korrelationsglied durchgeführt wird. Der Korrelator verfügt sodann über zwei oder mehr Korrelationsglieder. Dabei ist vorgesehen, dass das Empfangstemplate, welches in die mehreren Korrelationsglieder eingespeist wird, jeweils synchron allerdings phasenverschoben zu den anderen Empfangstemplates in diese eingespeist wird. Auf diese Weise können auch verschobene Empfangssignale, die möglicherweise eine Signalauslöschung bei der Korrelation in nur einem Korrelationsglied zur Folge hätten, detektiert werden. Es wird prinzipiell als ausreichend angesehen, wenn empfängerseitig zwei Korrelationsglieder vorgesehen sind und synchron zwei Vergleichsoperationen durchgeführt werden, wobei die beiden Empfangstemplates um 90 Grad phasenverschoben zueinander sind. Gleichwohl sind auch Ausgestaltungen denkbar, bei denen drei, vier oder auch mehr Vergleiche synchron zueinander mit entsprechend phasenverschobenen Empfangstemplates durchgeführt werden. Die Phasenverschiebung wird man geeignet zwischen 0-180 Grad aufteilen. Bei einem beispielhaften Einsatz von drei Korrelationsgliedern ist das in diese eingespeiste Empfangstemplate jeweils typischerweise um 60 Grad zueinander verschoben. Vorteilhaft bei einer Ausgestaltung, bei der der Korrelator zwei oder mehr Korrelationsglieder aufweist, ist zudem, dass eine ansonsten unter Umständen sich einstellende Jitter-Problematik weitestgehend kontrolliert wird und zusätzliche Rückkoppel-Netzwerke zur Phasenkorrektur grundsätzlich nicht erforderlich sind.

Unabhängig davon, ob die Detektionseinrichtung ein oder mehrere Korrelationsglieder aufweist und dem entsprechend das Verfahren für die Detektion eines reflektierten UWB-Radarsignals mit einem oder synchron mehreren Vergleichsprozessen durchgeführt werden, kann eine Änderungsdetektion infolge der Berücksichtigung der erwarteten Signallaufzeit unterschiedlich erfolgen. Wird das Verfahren betrieben, ohne dass der zeitliche Versatz, in dem die Vergleichsoperation durchgeführt wird, geändert wird, ist dieses geeignet, den Zutritt eines bewegten Objekts, beispielsweise einer Person, in den Überwachungsbereich zu detektieren. Wird dagegen typischerweise gemäß einem vorgegebenen Algorithmus der zeitliche Abstand zwischen dem Zeitpunkt des Sendens des UWB-Radarsignals und dem Durchführen der Vergleichsoperation geändert, erfolgt eine Überwachung des Detektionsbereiches in seiner Tiefe, mithin hinsichtlich seines Abstandes von der Detektionseinrichtung. Somit kann auf diese Weise nicht nur der Eintritt eines bewegten Objekts in den Überwachungsbereich sondern auch seine Bewegung in Bezug auf seinen Abstand zur Detektionseinrichtung detektiert werden.

Die Einstellbarkeit der Verzögerung kann bei der Einrichtung der Detektionseinrichtung - d. h: bei ihrer Installation - genutzt werden, um den Überwachungsbereich zu kalibrieren. Bei einigen Anwendungen wird die mögliche Tiefe des Überwachungsbereiches der Detektionseinrichtung die tatsächlich zu überwachende Raumtiefe überschreiten. Der Betrieb dieser Detektionseinrichtung kann sodann auf eine Überwachung der tatsächlichen Tiefe des Überwachungsbereiches begrenzt werden.

In einer Weiterbildung ist vorgesehen, dass das Empfangstemplate an das erwartete Empfangssignal angepasst wird und zu diesem Zweck im Hinblick auf eine durch wenigstens einen der Vorgänge
- Senden des Sendetemplates,
- Reflektieren des Sendetemplates an dem im Überwachungsbereich befindlichen Objekt sowie
- Empfangen des reflektierten Signals
erwartete Signaländerung wenigstens eines von Sendetemplate und Empfangstemplate dergestalt beeinflusst wird, dass das gesendete, anschließend reflektierte und anschließend empfangene Signal in hinreichendem Maße dem Empfangstemplate entspricht.

Bei dieser Weiterbildung wird die Detektionsverlässlichkeit dadurch erhöht, dass das Empfangssignal und/oder das Empfangstemplate aufeinander abgestimmt sind bzw. abgestimmt werden, um auf diese Weise Signaländerungen im Anschluss an die Generierung eines Sendetemplates bis zum Vorgang des Empfangens zumindest teilweise zu kompensieren. Je besser diese Kompensation ausfällt, desto größer ist die Detektionsverlässlichkeit. Eine Anpassung des Empfangssignales erfolgt durch entsprechende Generierung oder Beeinflussung eines Sendetemplates. Bei diesem Verfahren wird somit eine Anpassung des Sendetemplates und/oder des Empfangstemplates an die erwarteten Signaländerungen vorgenommen, die das Sendetemplate bei dem Vorgang des Sendens und/oder bei dem Vorgang des Reflektierens an einem Objekt und/oder bei dem Vorgang des Empfangens verändern. Bei dem Vorgang des Sendens erfolgt je nach eingesetzter Antenne und deren Charakteristik eine gewisse Signalveränderung, die als Verzerrung angesprochen werden kann. Weitere Signalveränderungen, insbesondere in Form von Verzerrungen können bei der Reflektion des gesendeten Signals an einem Objekt und/oder bei dem Vorgang des Empfangens, letzteres wiederum vornehmlich abhängig von der eingesetzten Antenne und ihrer Charakteristik eintreten. Die erwarteten Signaländerungen können ermittelt oder abgeschätzt werden, mit welchen Signaländerungen sodann das Sendetemplate und/oder das Empfangstemplate entsprechend angepasst bzw. beeinflusst werden. Bei einer Anpassung des Sendetemplates erfolgt dieses durch eine Vorverzerrung. Bei diesem Ansatz wird das Sendetemplate in Abhängigkeit von den erwarteten Signaländerungen durch den Sendevorgang und/oder seiner Reflektion an einem im Überwachungsbereich befindlichen Objekt und/oder den Empfangsvorgang verzerrt. Typischerweise sind die Signaländerungen beim Senden und Empfangen definierter erfassbar, weshalb gemäß einem Ausführungsbeispiel das Sendetemplate in Bezug auf die erwarteten Signaländerungen dieser Vorgänge vorverzerrt wird.

In gleicher Weise kann das Empfangstemplate vor Einbringen desselben in die Korrelation entsprechend den durch das Senden des Sendetemplates und/oder seine Reflektion und/oder das Empfangen zu erwartender Signaländerungen angepasst bzw. verzerrt werden, um auf diese Weise eine höhere Ähnlichkeit mit dem erwarteten Empfangssignal zu erhalten.

Auch eine Kombination der vorbeschriebenen Maßnahmen ist möglich, bei der sodann das Sendetemplate und das Empfangstemplate entsprechend beeinflusst werden.

Zur Maximierung einer Korrelation zwischen dem Empfangssignal und dem Sendetemplate ist gemäß einer Ausgestaltung die Anpassung einstellbar. Bei dieser Ausgestaltung wird zum Maximieren einer Korrelation der Signale die Vorverzerrung bei laufendem Sende- und Empfangsbetrieb innerhalb der möglichen Grenzen solange geändert, bis eine maximale Übereinstimmung zwischen Sendetemplate und empfangenden Reflektionssignal (Empfangssignal) gegeben ist. Somit erfolgt bei einer solchen Ausgestaltung eine umgebungsspezifische Parametrierung des Sendetemplates in Abhängigkeit von den eingesetzten, eine Signalverzerrung beeinflussenden Elementen.
Weitere Vorteile und Ausgestaltungen ergeben sich aus der nachfolgenden Beschreibung eines Ausführungsbeispiels unter Bezugnahme auf die beigefügten Figuren. Es zeigen:
- **Fig. 1:**: ein schematisiertes Blockschaltbild einer Bewegungsdetektionseinrichtung, arbeitend mit einem UWB-Radarsignal,
- **Fig. 2:**: eine Einrichtung zur Erzeugung eines UWB-Radarsignals als Teil der Bewegungsdetektionseinrichtung der Figur 1,
- **Fig. 3:**: eine schematisierte Blockdarstellung einer Bewegungsdetektionseinrichtung entsprechend derjenigen, der Figur 1 bei einer ersten Ausgestaltung zum Betreiben derselben,
- **Fig. 4a - c:**: einzelne Schritte zum Erzeugen eines besonderen UWB-Signals als Sendetemplate,
- **Fig. 5a - d:**: Diagramme, die die erste bis vierte Ableitung des in Figur 4c gezeigten Signals darstellen, und
- **Fig. 6:**: eine schematisierte Blockdarstellung einer Bewegungsdetektionseinrichtung entsprechend derjenigen, der Figur 1 bei einer Betriebsweise unter Verwendung der zu Figuren 4 und 5 beschriebenen UWB-Signale.

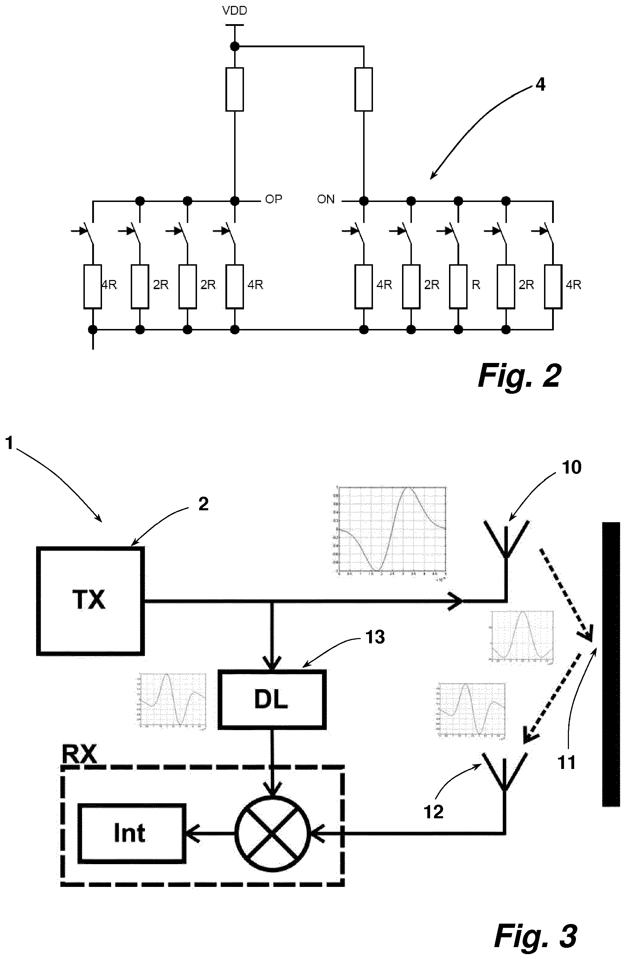

Eine Bewegungsdetektionseinrichtung 1 als Präsenz- oder Bewegungssensor umfasst eine Signalerzeugungseinheit 2, eine Empfangsstufe RX sowie eine Auswerteeinheit 3. Bei dem dargestellten Ausführungsbeispiel sind beide Einheiten 2, 3 als gemeinsamer integrierter Schaltkreis ausgeführt. Die Signalerzeugungseinheit 2 umfasst ein Template Timing Generator TTG und einen Transmit Pulse Generator TPG sowie eine Sendestufe TX. Der Transmit Pulse Generator TPG generiert ein Sendetemplate sowie ein Empfangstemplate. Bei dem dargestellten Ausführungsbeispielen werden diese aus einzelnen, sehr kurzen Pulsen geniert. Zum Generieren dieser Pulse dient eine Anordnung gewichteter Halbleiterschalter, die symmetrisch ausgelegt sind. Eine solche Halbleiterschalteranordnung 4 ist beispielhaft in Figur 2 gezeigt. Diese Halbleiterschalteranordnung 4 ist Teil des Transmit Pulse Generators TPG.

Das Timing und damit die Ansteuerung der einzelnen Halbleiterschalter der Halbleiterschaltanordnung 4 des Transmit Pulse Generators TPG übernimmt der Template Timing Generator TTG. Der Template Timing Generator TTG beinhaltet eine Delay Line DL mit einer bestimmten Anzahl an Verzögerungselementen, wobei die Anzahl der Verzögerungselemente der Anzahl der Halbleiterschalter in der Halbleiterschalteranordnung 4 entspricht. Parametriert wird die Delay Line DL über eine BIAS-Spannung VDT. Bei der dargestellten Ausgestaltung führt eine Erhöhung der BIAS-Spannung VDT zu einer Verkürzung der Delay Line DL, so dass das Sendetemplate insgesamt schmaler erzeugt werden kann. Dies hat zur Folge, dass die Pulsperioden innerhalb eines Templates kürzer werden, wodurch die Mittenfrequenz des Sendesignals im Spektrum ansteigen kann. Der Transmit Pulse Generator TPG verfügt über einen Sendeausgang zur Sendestufe TX sowie über zwei Referenzsignalausgänge 5, 5.1, über die die Empfangstemplates in die Auswerteeinheit 3 eingespeist werden.

Bei dem dargestellten Ausführungsbeispiel werden durch den Transmit Pulse Generator TPG sowohl ein Sendetemplate (Sendesignal) als auch ein Empfangstemplate (Referenzsignal für eine im Rahmen der Auswertung empfangener Signale durchgeführten Korrelation) erzeugt. Sendetemplate und Empfangstemplate werden bei dem beschriebenen Ausführungsbeispiel zeitlich nacheinander generiert. Insofern wird die Signalerzeugungseinheit 2 zwischen diesen beiden Modi umgeschaltet. Bei dieser Ausgestaltung ist sichergestellt, dass beide Templates zum Gewährleisten eines möglichst guten Korrelationsergebnisses in der Auswerteeinheit 3 die gleichen Frequenzanteile enthalten. Grundsätzlich könnten auch zwei identische Signalerzeugungseinheiten 2 vorgesehen sein, von denen eine für die Generierung des Sendetemplates und die weitere für die Generierung des Empfangstemplates zuständig sind. Bevorzugt ist jedoch die zuerst beschriebene Ausgestaltung.

Die Auswerteeinheit 3, in die das Ausgangssignal der Empfangsstufe RX eingespeist wird, umfasst zwei parallel geschaltete Korrelationsglieder 6, 6.1. Eingespeist wird in die Korrelationsglieder 6, 6.1 zum einen das über die Referenzsignalausgänge 5 bzw. 5.1 ausgegebene Empfangstemplate und zum anderen das Empfangssignal. Die beiden Korrelationsglieder 6, 6.1 werden phasenverschoben betrieben, und zwar indem das dem Korrelationsglied 6.1 zugeführte Empfangstemplate gegenüber dem dem Korrelationsglied 6 zugeführten Empfangstemplate um 90° phasenverschoben ist. Die Korrelationsglieder 6, 6.1 sind als Multiplizierer ausgeführt. Der Ausgang der Korrelationsglieder 6, 6.1 beaufschlagt den Eingang eines Integrators 7. Die integrierten Korrelationssignale werden über jeweils einen A/D-Wandler 8 bzw. 8.1 in digitale Signale gewandelt, bevor diese in einen Mikrocontroller 9 zur weiteren Verarbeitung eingespeist werden. Die A/D-Wandler 8, 8.1 sind bei diesem Ausführungsbeispiel Teil des integrierten Schaltkreises, durch den die Signalerzeugungseinheit 2 und die Auswerteeinheit 3 realisiert sind.

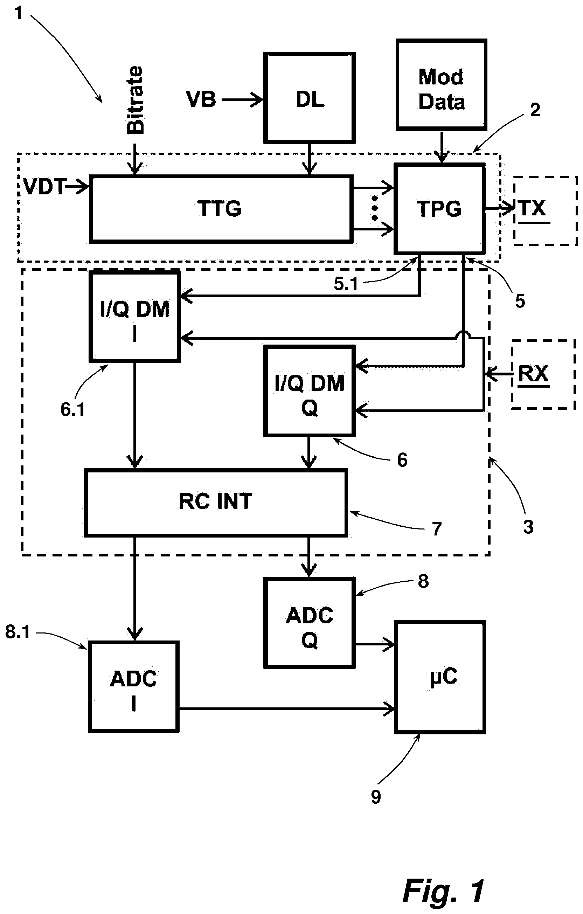

Zur Verbesserung der Detektionsverlässlichkeit gegenüber herkömmlichen Verfahren zum Betreiben einer solchen Bewegungsdetektionseinrichtung 1 wird gemäß einer ersten Ausgestaltung das der Auswerteeinheit 3 bzw. den darin enthaltenen Korrelationsgliedern 6, 6.1 zur Verfügung gestellte Empfangstemplate gegenüber dem Sendetemplate verzerrt. Durch diese Maßnahme wird ein Empfangstemplate bereitgestellt, in dem bereits ein oder mehrfache Signaländerungen, die das Sendetemplate auf dem Weg über die Sendeantenne 10, durch die Reflektion an einem in dem Überwachungsbereich befindlichen Objekt und durch den Vorgang des Empfangs voraussichtlich erfahren wird, verzerrt. Visualisiert ist eine solche Signaländerung in Figur 3. Die Bewegungsdetektionseinrichtung 1 ist in dieser Figur nur mit ihren wesentlichen Bestandteilen wiedergegeben. Als Sendetemplate wird ein Gaußpuls generiert. Dieser wird der Sendeantenne 10 zugeführt. Im Zuge der Abstrahlung erfährt das Sendetemplate eine Signaländerung, die als erste Ableitung des Gaußpulses dargestellt werden kann (neben der Sendeantenne 10 in Figur 1 dargestellt). Schematisiert ist mit dem Bezugszeichen 11 innerhalb des Überwachungsbereiches der Bewegungsdetektionseinrichtung 1 ein Objekt gezeigt, an dem das gesendete Signal reflektiert wird. Infolge der Reflektion erfährt das gesendete Signal eine weitere Signaländerung. Das gesendete Signal erfährt somit eine weitere Ableitung, wie dieses in Figur 3 benachbart zu dem Punkt der Reflektion auf dem Objekt 11 eingeblendet ist. Das reflektierte Signal wird von der Empfangsantenne 12 empfangen, wodurch dieses eine weitere Signaländerung bzw. -verzerrung erfahren kann. Die Folge im Falle einer Signaländerung wäre, dass das Signal nunmehr bereits zum dritten Mal abgeleitet ist. Das von der Empfangsantenne 12 über die Empfangsstufe RX an die Auswerteeinheit 3 übermittelte Signal ist in Figur 3 neben der Empfangsantenne 12 gezeigt.

Mit zeitlichem Versatz zu der Genierung des Sendetemplates wird das Empfangstemplate geniert. Generiert wird zunächst ein Sendetemplate, von dem in der Verzögerungsschaltung 13 die dritte Ableitung gebildet wird. Dieses Empfangstemplate wird der Auswerteeinheit 3 als Empfangstemplate zugeführt. Somit geht in die im Rahmen der Auswertung durchgeführte Korrelation als Empfangstemplate die dritte Ableitung des Sendetemplates einerseits ein und andererseits das tatsächlich empfangene Signal - das Empfangssignal. Da aufgrund der beschriebenen Signaländerungen das Empfangssignal gegenüber dem Sendetemplate mehrfach verändert, im vorliegenden Fall dreifach abgeleitet worden ist, ist das Ergebnis der Korrelation zwischen Empfangssignal und Empfangstemplate besonders hoch. Es versteht sich, dass die Signaländerungen, die das Sendetemplate als gesendetes Signal auf dem Weg vom Transmit Pulse Generator TPG zu der Auswerteeinheit 3 erfährt durch die in Figur 3 gezeigten Ableitungen angenähert dargestellt ist. Gleichwohl ist durch diese Ableitungen die Korrelation zu dem in diesem jeweiligen Punkt tatsächlichen Signal signifikant größer, als dieses bei einer Korrelation des gesendeten Signals mit einem mit dem Sendetemplate identischen Empfangstemplate der Fall wäre.

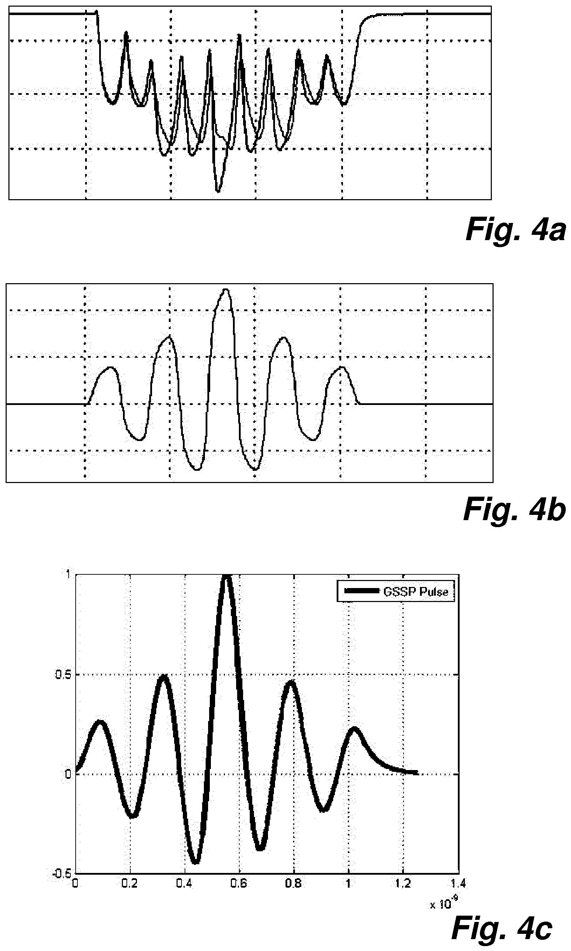

Bei einer alternativen Betriebsweise der Bewegungsdetektionseinrichtung 1 wird ein sende- bzw. korrelationsresistentes Sendetemplate geniert. Bei diesem Sendetemplate handelt es sich um eine durch eine Gaußpulshüllkurve im Zeitbereich gewichtete Winkelfunktion. Im beschriebenen Fall wird als Winkelfunktion ein Sinus verwendet. Über die Halbleiterschaltanordnung 4 werden gemäß einem Ausführungsbeispiel dieser Betriebsweise zwei negative Pulsformen erzeugt, die unterschiedliche Minima durch entsprechende Gewichtung der einzelnen Schalter der Schalteranordnung 4 aufweisen. Figur 4a zeigt zwei derartige Pulsformen. In einer Überlagerung ergeben diese ein gaußförmiges Signal, das sehr kurze Pulsperioden beinhaltet. Die überlagerten Signale sind nach Gewichtung in Figur 4b gezeigt. In den Figuren 4a, 4b ist auf der x-Achse die Zeit aufgetragen. Figur 4b macht deutlicht, dass das Sendetemplate als Puls aus mehreren Einzelpulsen zusammengesetzt ist.

Figur 4c zeigt das im Folgenden als gaußgeformter Sinuspuls (GSSP) angesprochene Signal in einer etwas idealisierteren Darstellung gezeigt. Von Besonderheit bei der Erzeugung eines solchen GSSP-Pulses ist, dass die Signalerzeugung im Unterschied zu vorbekannten Verfahren unmittelbar im Zeitbereich erfolgt. Die dafür benutzte Winkelfunktion weist eine Frequenz auf, die erheblich niederfrequenter ist als die verwendete UWB-Frequenz. Typischerweise ist die Frequenz der Winkelfunktion um einen Faktor, der größer als 100 ist, niederfrequenter als die verwendete UWB-Frequenz.

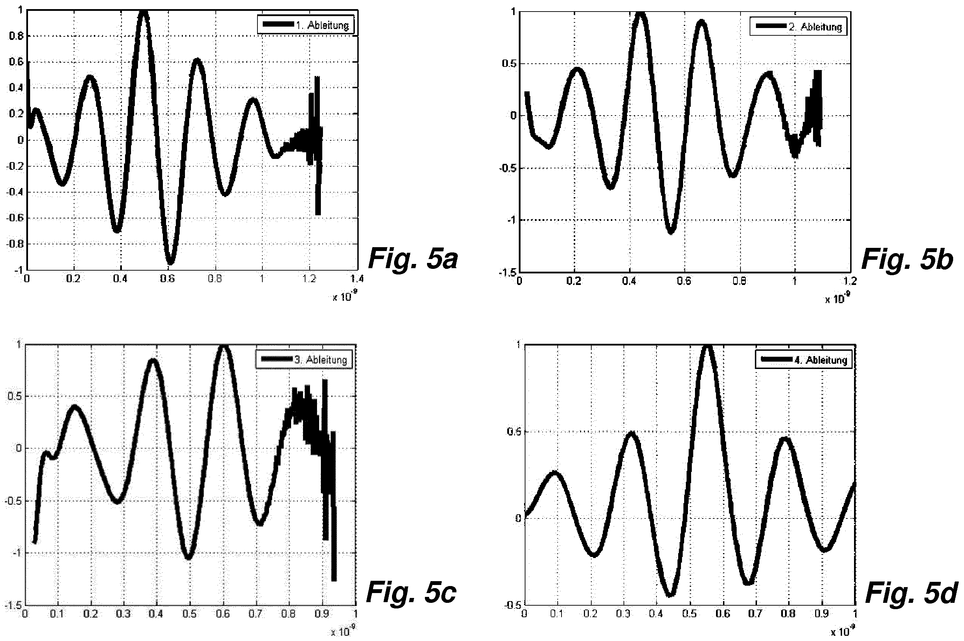

Figuren 5a-c zeigen die erste Ableitung (Figur 5a), die zweite Ableitung (Figur 5b), die dritte Ableitung (Figur 5c) und die vierte Ableitung (Figur 5d) des durch den Transmit Pulse Generator TPG genierten GSSP UWB-Signals. Die gezeigten Ableitungen verdeutlichen Folgendes: Bei der ersten Ableitung wird das ursprüngliche GSSP-Signal nur leicht deformiert. Die zweite Ableitung führt zu einer Invertierung um 180°. Bei der dritten Ableitung ist eine leichte Deformierung und eine Invertierung um 180° feststellbar. Die vierte Ableitung entspricht dem ursprünglichen GSSP-Sendepuls. Das besondere an diesem Sendetemplate und seinen Ableitungen ist, dass die Deformierungen nur so gering sind, dass diese lediglich zu geringen und damit hinnehmbaren Verlusten bei der Korrelation führen. Die Invertierungen fallen nicht ins Gewicht, da die bei der Bewegungsdetektionseinrichtung 1 verwendete Auswerteeinheit diese kompensiert. Daher kann dieses Sendetemplate als sende- bzw. korrelationsresistent angesprochen werden.

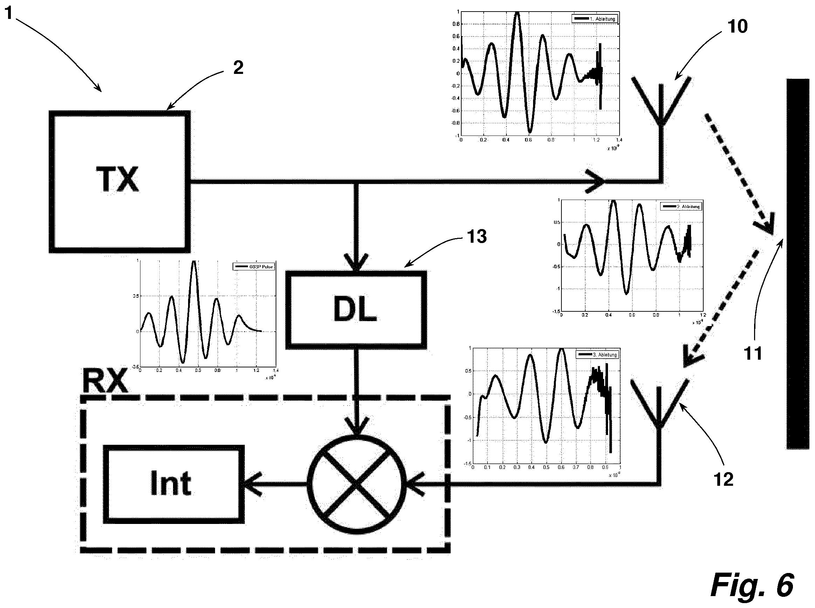

Figur 6 zeigt die in Figur 3 gezeigte Anordnung bei einem Betrieb der Bewegungsdetektionseinrichtung 1 unter Verwendung von GSSP-Signalen als Sende- und Empfangstemplate. Ebenso wie bei Figur 3 sind an den entsprechenden Stellen in Figur 6 die aktuellen Signalformen gezeigt.

In den Korrelationsschritt gehen bei diesem Ausführungsbeispiel somit das dem Sendetemplate entsprechende Empfangstemplate (dargestellt neben der Verzögerungsschaltung 13) und die dritte Ableitung dieses Signals ein.

In einer anderen Ausgestaltung dieses Verfahrens wird das Sendetemplate in einem nachgeschalteten Schritte 1-mal abgeleitet, so dass dieses der ersten Ableitung entsprechende Signal das an die Sendestufe TX mit ihrer Sendeantenne 10 übermittelte Signal ist. Nach drei Ableitungen würde sodann ein mit dem Sendetemplate identisches Empfangssignal in die Auswerteeinheit 3 eingespeist werden.

Mit den beschriebenen Verfahren ist eine Detektionsverlässlichkeit aufgrund der deutlich verbesserten Korrelation zwischen Empfangssignal und Empfangstemplate gegenüber herkömmlichen Verfahren erheblich verbessert. Ausgenutzt werden kann bei der Konzeption der Detektionseinrichtung, dass für den Betrieb der Bewegungsdetektionseinrichtung aufgrund des Sendens sehr kurzer Impulse und der Möglichkeit, zwischen den Pulsen relativ längere Pausen zu belassen, ein und dieselbe Antenne für die Zwecke des Sendens des UWB-Radarsignals und für die Zwecke des zeitversetzten Empfangs des erwarteten Reflektions-Signals eingesetzt werden kann.

Von weiterem Vorteil ist, dass sich dieses Verfahren innerhalb der behördlich zugelassenen Grenzen realisieren lässt und dennoch eine Bewegungsdetektion mit einem hinreichend großen Überwachungsbereich bei hinreichend hoher Ortsauflösung möglich ist. Ein Frequenzbereich zwischen 3,1 GHz und 4,8 GHz hat sich als besonders zweckmäßig für die Zwecke der Durchführung des beschriebenen Verfahrens herausgestellt. Es versteht sich, dass sich die beanspruchte Erfindung in anderen Frequenzbereichen realisieren lässt, wobei ein Frequenzband zwischen 1GHz und 10 GHz bevorzugt ist. Besonders bevorzugt ist eine Ausgestaltung im unteren Bereich des vorbeschriebenen Bereiches, damit der Hardwareaufwand und die Energieaufnahme gering gehalten werden können.

Typischerweise wird man bei der Inbetriebnahme der Detektionseinrichtung zunächst ein Profil des Überwachungsbereiches in Bezug auf die detektierten Signalreflektionen aufnehmen. Dieses Profil dient sodann als Vergleichsprofil, um im Wege eines Differenzverfahrens Änderungen im Überwachungsbereich feststellen zu können.

Der zeitliche Versatz, mit dem die Referenzsignale in die Multiplizierer eingespeist werden, entspricht der erwarteten Signallaufzeit bei angenommenen Vorhandensein eines mit einem bestimmten Abstand zur Bewegungsdetektionseinrichtung angeordneten Objekts, von dem das Sendesignal reflektiert wird. Somit wird mit diesem Verfahren untersucht, ob sich ein solcher Objekt in einem vorgegebenen Abstand zur Detektionseinrichtung befindet. Um den Überwachungsbereich in der Tiefe und somit hinsichtlich des Abstandes von der Bewegungsdetektionseinrichtung abtasten zu können, wird während des Betriebs der Bewegungsdetektionseinrichtung die Verzögerungszeit geändert. Dies erfolgt nach einem vorgegebenen Algorithmus. Auf diese Weise wird die gewünschte Tiefe des Überwachungsbereiches gescant. Bei der Inbetriebnahme der Bewegungsdetektionseinrichtung ist der geräteseitig vorgegebene maximale Überwachungsbereich hinsichtlich seiner Tiefe auf die tatsächliche Tiefe des Überwachungsbereiches eingestellt worden, und zwar in Bezug auf die maximal zulässige Verzögerungszeit. Wenn beispielsweise die maximale Tiefe des Überwachungsbereiches der Bewegungsselektionseinrichtung mit 20 Metern angegeben ist und der tatsächliche Überwachungsbereich nur eine Tiefe von 5 Metern aufweist, wird die maximale Verzögerungszeit zum Einspeisen der Empfangstemplates in die Korrelationsglieder auf den maximalen Abstand, den ein Objekt von der Detektionseinrichtung aufweisen kann, hier: 5 Meter, begrenzt. Dabei versteht es sich, dass ein Scanalgorithmus auch ergebnisgesteuert werden kann. Wird etwa das Vorhandensein eines Objekts in Detektionsreichweite im Überwachungsbereich erfasst, kann von einem ansonsten durchlaufenden Scanmodus abgewichen werden, um eine Ergebnisredundanz zu erzeugen oder nur das nähere Umfeld des detektierten Objekts zu beobachten. Ebenfalls ist es möglich, den Scan des Überwachungsbereiches zunächst in größeren Schritten durchzuführen, um dann bei Detektion eines Objekts den Scanvorgang in kleineren Schritten und auf einen Bereich um den detektierten Objekt begrenzt durchzuführen. Weitere Betriebsmöglichkeiten sind selbstverständlich ebenfalls möglich.

Typischerweise erfolgt die Auswertung durch eine Differenzbildung zwischen einem zuvor aufgenommenen Detektionsprofil und einem Nachfolgenden.

Wird über die Empfangseinheit ein in Detektionsreichweite im Überwachungsbereich befindlicher Objekt detektiert, wird dieses ausgewertet und in dem Mikrocontroller bewertet, an welchen Vorgang sich die Generierung eines Steuersignals zum Ansteuern beispielsweise eines Aktors eines Gebäudeinstallationssystems anschließen kann. Beispielsweise kann es sich hierbei um das Anschalten oder Ausschalten der Beleuchtungseinrichtung oder eines Teil derselben handeln. Vor dem Hintergrund, dass mit der Bewegungsdetektionseinrichtung und dem vorbeschriebenen Verfahren im Scanmodus zum Überwachen des Überwachungsbereiches nicht nur Bewegungen als solche sondern auch die Bewegungsrichtung, hinsichtlich einer Änderung im Abstand von der Bewegungsdetektionseinrichtung festgestellt werden kann, kann mit einer einzigen Bewegungsdetektionseinrichtung sogar eine Lauflichtbeleuchtung, also eine auf einen räumlichen Abschnitt begrenzte Beleuchtung, die sukzessive mit der Bewegung der Person mitläuft, gesteuert werden.

Durch die zweifache, synchrone Durchführung der Vergleichsoperationen, wobei in beide Korrelationsglieder phasenverschobene Referenzsignale eingespeist werden, sind eine Maximierung einer Korrelation und damit eine hohe Signalwiedererkennungsrate gegeben.

Betrieben wird das Verfahren typischerweise dergestalt, dass bei jeder Verzögerungszeiteinstellung mehrere Pulse gesendet werden. Aus den Ergebnissen wird ein Mittelwert gebildet. Die Pulsanzahl liegt typischerweise zwischen 10 und 1000 Pulsen. Die Pulsanzahl je Einstellung wird man in Abhängigkeit von der gewünschten Erfassungspräzision und der gewünschten Scangeschwindigkeit wählen. Dabei versteht es sich, dass bei einem Betrieb des Verfahrens die Sendepulsanzahl und die Verzögerungszeiteinstellung geändert werden kann. Beispielsweise kann diese in einem ersten Scanmodus geringer sein als nach einer ersten Detektion einer Änderung im Überwachungsbereich.

Von Vorteil bei dem beschriebenen Verfahren ist auch, dass aufgrund der nur geringen Signalstärke und des Einsatzes eines UWB-Radarsignals der Betrieb eines solchen Systems so gut wie nicht detektierbar ist.

### Bezugszeichenliste

- 1: Bewegungsdetektionseinrichtung
- 2: Signalerzeugungseinheit
- 3: Auswerteeinheit
- 4: Halbleiterschalteranordnung
- 5, 5.1: Referenzsignalausgang
- 6, 6.1: Korrelationsglied
- 7: Integrator
- 8, 8.1: A/D-Wandler
- 9: Mikrocontroller
- 10: Sendeantenne
- 11: Objekt
- 12: Empfangsantenne
- 13: Verzögerungsschaltung
- DL: Delay Line
- RX: Empfangsstufe
- TPG: Template Pulse Generator
- TTG: Template Timing Generator
- TX: Sendestufe

## Patentansprüche

1. Verfahren zum Detektieren einer Änderung innerhalb eines einem Präsenz- oder Bewegungssensor (1) zugeordneten Überwachungsbereiches umfassend: Generieren und Senden eines UWB-Signals als Sendetemplate, Empfangen eines von einem in Detektionsreichweite befindlichen Objekt (11) reflektierten Signals als Empfangssignal und Auswerten des Empfangssignals in Bezug auf seine Entfernung zu dem Sensor (1), wobei die Empfangssignale mit einem Empfangstemplate korreliert werden und die Korrelation dergestalt zeitlich versetzt zu dem Zeitpunkt des Sendens des Sendetemplates durchgeführt wird, dass der zeitliche Versatz der bei einer vorgegebenen Entfernung des in Detektionsreichweite befindlichen Objekts erwarteten Signallaufzeit entspricht und bei hinreichender Übereinstimmung zwischen einem Empfangssignal und dem Empfangstemplate das Empfangssignal als von dem in der vorgegebenen Entfernung befindlichen Objekt (11) reflektiertes Sendetemplate bewertet wird, wobei das Empfangstemplate dem Sendetemplate entspricht und eine durch eine Gaußpulshüllkurve im Zeitbereich gewichtete Winkelfunktion als Sendetemplate generiert wird **dadurch gekennzeichnet, dass** das Empfangstemplate an das erwartete Empfangssignal durch eine Vorverzerrung angepasst wird.

2. Verfahren nach Anspruch 1, **dadurch gekennzeichnet, dass** das Sendetemplate durch Gewichten einer im Vergleich zu dem erzeugten UWB-Signal niederfrequenten Winkelfunktion mit einer Gauß-Funktion im Zeitbereich erzeugt wird.

3. Verfahren nach Anspruch 1 oder 2, **dadurch gekennzeichnet, dass** das Sendetemplate durch einzelne Pulse mit Pulslängen im Subnanosekundenbereich erzeugt wird.

4. Verfahren nach Anspruch 3, **dadurch gekennzeichnet, dass** mehrere Pulsformen mit unterschiedlichen Pulsausformungen erzeugt werden, die in ihrer überlagerten Summe im Zeitbereich das Grundsignal für das Sendetemplate und das Empfangstemplate bilden.

5. Verfahren nach einem der Ansprüche 1 bis 4, **dadurch gekennzeichnet, dass** ein Empfangstemplate erzeugt wird, das identisch mit dem Sendetemplate ist.

6. Verfahren nach Anspruch 5, **dadurch gekennzeichnet, dass** das Sendetemplate und das Empfangstemplate zeitlich nacheinander generiert werden.

7. Verfahren nach Anspruch 6, **dadurch gekennzeichnet, dass** das Sendetemplate und das Empfangstemplate mit demselben Templategenerator (TTG, TPG) erzeugt werden, der zu diesem Zweck zwischen einem Modus zum Generieren eines Sendetemplates und einem Modus zum Generieren eines Empfangstemplates umgeschaltet wird.

8. Verfahren nach einem der Ansprüche 1 bis 7, **dadurch gekennzeichnet, dass** das Empfangstemplate an das erwartete Empfangssignal angepasst wird und zu diesem Zweck im Hinblick auf eine erwartete Signaländerung, die durch wenigstens einen der Vorgänge
- Senden des Sendetemplates,
- Reflektieren des Sendetemplates an dem im Überwachungsbereich befindlichen Objekt (11) sowie
- Empfangen des reflektierten Signals
erfolgt, wenigstens eines von Sendetemplate und Empfangstemplate dergestalt beeinflusst wird, dass das gesendete, anschließend reflektierte und anschließend empfangene Signal in hinreichendem Maße dem Empfangstemplate entspricht.

9. Vorrichtung zum Detektieren einer Änderung innerhalb eines einem Präsenz- oder Bewegungssensor (1) zugeordneten Überwachungsbereiches, welche Vorrichtung ein UWB-Signal als Sendetemplate generiert und sendet, ein von einem in Detektionsreichweite befindlichen Objekt (11) reflektiertes Signal (Empfangssignal) empfängt und das Empfangssignals in Bezug auf seine Entfernung zu dem Sensor (1) auswertet, wobei die Empfangssignale mit einem Empfangstemplate korreliert werden und die Korrelation dergestalt zeitlich versetzt zu dem Zeitpunkt des Sendens des Sendetemplates durchgeführt wird, dass der zeitliche Versatz der bei einer vorgegebenen Entfernung eines in Detektionsreichweite befindlichen Objekts erwarteten Signallaufzeit entspricht und bei hinreichender Übereinstimmung zwischen einem Empfangssignal und dem Empfangstemplate das Empfangssignal als von einem in der vorgegebenen Entfernung befindlichen Objekt (11) reflektiertes Sendetemplate bewertet wird, wobei das Empfangstemplate dem Sendetemplate entspricht und die Vorrichtung eine durch eine Gaußpulshüllkurve im Zeitbereich gewichtete Winkelfunktion als Sendetemplate generiert **dadurch gekennzeichnet, dass** die Vorrichtung das Empfangstemplate an das erwartete Empfangssignal durch eine Vorverzerrung anpasst.

10. Vorrichtung nach Anspruch 9, **dadurch gekennzeichnet, dass** diese eine Signalerzeugniseinheit (2), eine Empfangsstufe (RX) und eine Auswerteeinheit (3) umfasst, wobei die Signalerzeu-gungseinheit (2) einen Transmit Pulse Generator (TPG) zum Generieren eines Sendetemplates sowie eines Empfangstemplates mit einem Sendeausgang und wenigstens einen Referenzsignal-ausgang (5, 5.1) zum Einspeisen der Empfangstemplates in die Auswerteeinheit (3), einen Template Timing Generator (TPG) zum Timen einer Templategenerierung sowie eine durch den Sende-ausgang des Transmit Pulse Generators (TPG) beaufschlagte Sendestufe (TX) umfasst.

11. Vorrichtung nach Anspruch 10, **dadurch gekennzeichnet, dass** der Timing Template Generator (TTG) eine Delay Line (L) mit einer bestimmten Anzahl an Verzögerungselementen beinhaltet.

12. Vorrichtung nach Anspruch 10 oder 11, **dadurch gekenn-zeichnet**, dass die Auswerteeinheit (3) mehrere parallel geschaltete Korrelationsglieder (6, 6.1) umfasst, in die zum Einen das über die Referenzsignalausgänge (5, 5.1) ausgegebene Empfangstemplate und zum Anderen das Empfangssignal eingespeist werden.

13. Vorrichtung nach Anspruch 12, **dadurch gekennzeichnet, dass** die Korrelationsglieder (6, 6.1) als Multiplizierer ausgeführt sind und der Ausgang der Korrelationsglieder (6, 6.1) den Eingang eines Integrators beaufschlagt.

14. Vorrichtung nach Anspruch 13, **dadurch gekennzeichnet, dass** diese über jeweils einen an einen Integrator angeschlossenen A/D-Wandler (8, 8.1) verfügt, die die integrierten Korrelationssignale in digitale Signale wandeln, und dass der Ausgang der A/D-Wandler (8, 8.1) an den Eingang eines Mikrocontrollers (9) zur weiteren Signalverarbeitung angeschlossen ist.

## Claims

1. Method for detecting a change within a surveillance range of an associated presence or motion sensor (1), comprising: generating and transmitting a UWB signal as a transmission template, receiving a reflected signal from an object (11) located in the detection range as a received signal, and evaluating the received signal in relation to its distance from the sensor (1), wherein the received signals are correlated with a reception template, and the correlation is carried out temporally offset in relation to the time of transmission of the transmission template in such a way that the temporal offset corresponds to the signal time which is to be anticipated from the object located in the detection range at a predetermined distance, and, with sufficient correspondence between a received signal and the reception template, the received signal is evaluated as the transmission template reflected from the object (11) located at the predetermined distance, wherein the reception template corresponds to the transmission template, and an angle function, weighted by a Gaussian pulse envelope in the time range, is generated as the transmission template, **characterised in that** the reception template is adjusted to the anticipated received signal by a predistortion.

2. Method according to claim 1, **characterised in that** the transmission template is generated by weighting with an angle function of lower frequency in comparison with the UWB signal produced, with a Gaussian function in the time range.

3. Method according to claim 1 or 2 **characterised in that** the transmission template is generated by individual pulses with pulse lengths in the sub-nanosecond range.

4. Method according to claim 3, **characterised in that** a plurality of pulse forms with different pulse formations are generated, which in their superimposed sum total in the time range form the basic signal for the transmission template and for the reception template.

5. Method according to any one of claims 1 to 4, **characterised in that** a reception template is generated which is identical to the transmission template.

6. Method according to claim 5, **characterised in that** the transmission template and the reception template are generated in succession.

7. Method according to claim 6, **characterised in that** the transmission template and the reception template are generated with the same template generator (TTG, TPG), which for this purpose is switched between a mode for generating a transmission template and a mode for generating a reception template.

8. Method according to any one of claims 1 to 7, **characterised in that** the reception template is adjusted to the anticipated received signal, and for this purpose, with regard to an anticipated signal change, which is carried out by at least one of the procedures:
- transmitting of the transmission template,
- reflecting the transmission template at the object (11) located in the surveillance range, and
- reception of the reflected signal,
at least one of the transmission template and reception template are influenced in such a way that the signal which is transmitted, then reflected, and then received, corresponds in an sufficient extent to the reception template.

9. Device for detecting a change within a surveillance range allocated to a presence or motion sensor (1), which device generates and transmits a UWB signal as a transmission template, receives a signal reflected from an object (11) located in the detection range (received signal), and evaluates the received signal in relation to its distance from the sensor (1), wherein the received signals are correlated with a reception template, and the correlation is carried out temporally offset to the time of the transmission of the transmission template in such a way that the temporal offset corresponds to the anticipated run time at a predetermined distance of an object located in the detection range, and, with sufficient correspondence between a received signal and the reception template, the received signal is evaluated as the transmission template reflected from an object (11) located at the predetermined distance, wherein the reception template corresponds to the transmission template, and the device generates as the transmission template an angle function weighted by a Gaussian pulse envelope in the time range, **characterised in that** the device adjusts the reception template to the anticipated received signal by a predistortion.

10. Device according to claim 9, **characterised in that** this device comprises a signal producing unit (2), a reception stage (RX), and an evaluation unit (3), wherein the signal producing unit (2) comprises a Transmit Pulse Generator (TPG) for generating a transmission template as well as a reception template, with a transmission output and at least one reference signal output (5, 5.1) for feeding the reception template into the evaluation unit (3), a Template Timing Generator (TPG) for timing a template generation, as well as a transmission stage (TX) imposed by the transmission output of the Transmit Pulse Generator (TPG).

11. Device according to claim 10, **characterised in that** the Timing Template Generator (TTG) contains a delay line (L) with a specific number of delay elements.

12. Device according to claim 10 or 11, **characterised in that** the evaluation unit (3) comprises a plurality of correlation elements (6, 6.1) connected in parallel, into which, on the one hand, the reception template is fed by way of the reference signal outputs (5, 5.1), and, on the other, the received signal is fed in.

13. Device according to claim 12, **characterised in that** the correlation elements (6, 6.1) are configured as multipliers, and the output of the correlation elements (6, 6.1) is imposed at the input of an integrator.

14. Device according to claim 13, **characterised in that** this is provided in each case with an A/D converter (8, 8.1) connected to an integrator, which converts the integrated correlation signals into digital signals, and that the output of the A/D converters (8, 8.1) is connected to the input of a microcontroller (9) for further signal processing.

## Revendications

1. Procédé de détection d'un changement dans une zone de surveillance associée à un détecteur (1) de mouvement ou de présence comprenant : génération et émission d'un signal UWB sous la forme d'un modèle d'émission, réception d'un signal réfléchi par un objet (11) qui se trouve à portée de détection sous la forme d'un signal de réception et exploitation du signal de réception en ce qui concerne sa distance par rapport au détecteur (1), les signaux de réception étant corrélés avec un modèle de réception et la corrélation étant réalisée selon un décalage dans le temps par rapport au moment de l'émission du modèle d'émission de telle sorte que le décalage dans le temps correspond au temps de transit du signal attendu lors d'une distance prédéfinie d'un objet situé à portée de détection et que, lors d'une concordance suffisante entre un signal de réception et le modèle de réception, le signal de réception est traité comme un modèle d'émission réfléchi par l'objet (11) situé à une distance prédéfinie, le modèle de réception correspondant au modèle d'émission, et une fonction trigonométrique pondérée par une enveloppe d'impulsions gaussiennes dans la plage de temps étant générée en tant que modèle d'émission, **caractérisé en ce que** le modèle de réception est adapté par prédistorsion au signal de réception attendu.

2. Procédé selon la revendication 1, **caractérisé en ce que** le modèle d'émission est généré par pondération d'une fonction trigonométrique, laquelle est à basses fréquences comparé au signal UWB généré, avec une fonction gaussienne dans la plage de temps.

3. Procédé selon la revendication 1 ou 2, **caractérisé en ce que** le modèle d'émission est généré par des impulsions unitaires avec des longueurs d'impulsions situées dans une plage de subnanosecondes.

4. Procédé selon la revendication 3, **caractérisé en ce que** plusieurs formes d'impulsions sont générées avec des configurations d'impulsions différentes, lesquelles constituent par leur somme superposée dans la plage de temps, le signal de base pour le modèle d'émission et le modèle de réception.

5. Procédé selon l'une des revendications 1 à 4, **caractérisé en ce qu'**un modèle de réception est généré, lequel est identique avec le modèle d'émission.

6. Procédé selon la revendication 5, **caractérisé en ce que** le modèle d'émission et le modèle de réception sont générés temporellement l'un après l'autre.

7. Procédé selon la revendication 6, **caractérisé en ce que** le modèle d'émission et le modèle de réception sont générés avec le même générateur de modèles (TTG, TPG), lequel est commuté à cet effet entre un mode de génération d'un modèle d'émission et un mode de génération d'un modèle de réception.

8. Procédé selon l'une des revendications 1 à 7, **caractérisé en ce que** le modèle de réception est adapté au signal de réception attendu et qu'à cet effet, dans une perspective d'un changement attendu du signal, lequel s'effectue à la suite d'au moins un des procédés :
- émission d'un modèle d'émission
- réflexion du modèle d'émission sur l'objet (11) situé dans la zone de surveillance ainsi que
- réception du signal réfléchi,
au moins l'un des modèles, d'émission ou de réception, est influencé de telle sorte que le signal émis, puis réfléchi et puis réceptionné correspond de manière suffisante au modèle de réception.

9. Dispositif de détection d'un changement dans une zone de surveillance associée à un détecteur (1) de mouvement ou de présence, lequel dispositif génère et émet un signal UWB sous la forme d'un modèle d'émission, réceptionne un signal (signal de réception) réfléchi par un objet (11) qui se trouve à portée de détection et exploite le signal de réception en ce qui concerne sa distance par rapport au détecteur (1), les signaux de réception étant corrélés avec un modèle de réception et la corrélation étant réalisée selon un décalage dans le temps par rapport au moment de l'émission du modèle d'émission de telle sorte que le décalage dans le temps correspond au temps de transit du signal attendu lors d'une distance prédéfinie d'un objet situé à portée de détection et que, lors d'une concordance suffisante entre un signal de réception et le modèle de réception, le signal de réception est traité comme un modèle d'émission réfléchi par l'objet (11) situé à une distance prédéfinie, le modèle de réception correspondant au modèle d'émission et le dispositif générant une fonction trigonométrique pondérée par une enveloppe d'impulsions gaussiennes dans la plage de temps en tant que modèle d'émission, **caractérisé en ce que** le dispositif adapte par prédistorsion le modèle de réception au signal de réception attendu.

10. Dispositif selon la revendication 9, **caractérisé en ce que** cette unité de génération de signaux (2) comprend un étage de réception (RX) et une unité de traitement (3), laquelle unité de génération de signaux (2) comprend un Transmit Pulse Generator (TPG), lequel est destiné à générer un modèle d'émission ainsi qu'un modèle de réception avec une sortie d'émission et au moins une sortie de signal de référence (5, 5.1), laquelle est destinée à injecter les modèles de réception dans l'unité de traitement (3), un Template Timing Generator (TTG) pour chronométrer la génération des modèles, ainsi qu'un étage d'émission (TX) approvisionné par la sortie d'émission du Transmit Pulse Generator (TPG).

11. Dispositif selon la revendication 10, **caractérisé en ce que** le Timing Template Generator (TTG) comporte une ligne à retard (L) avec un certain nombre d'éléments de retard.

12. Dispositif selon l'une des revendications 10 ou 11, **caractérisé en ce que** l'unité de traitement (3) comprend plusieurs maillons de corrélation (6, 6.1) commutés parallèlement, dans laquelle arrivent d'une part, le modèle de réception délivré par les sorties de signal de référence (5, 51) et d'autre part, le signal de réception.

13. Dispositif selon la revendication 12, **caractérisé en ce que** les maillons de corrélation (6, 6.1) sont conformés en tant que multiplicateurs et que la sortie des maillons de corrélation (6, 6.1) approvisionne l'entrée d'un intégrateur.

14. Dispositif selon la revendication 13, **caractérisé en ce que** celui-ci dispose respectivement d'un convertisseur A/D (8, 8.1) raccordé à un intégrateur, qui convertit les signaux de corrélation intégrés en signaux numériques et que la sortie du convertisseur A/D (8, 8.1) est raccordée à l'entrée d'un microcontrôleur (9) assurant la suite du traitement du signal.
